# EUROPÄISCHE PATENTSCHRIFT

(11) **EP 1 245 763 B1**
(45) Veröffentlichungstag und Bekanntmachung des Hinweises auf die Patenterteilung: **23.06.2004**
(21) Anmeldenummer: 02005600.8
(22) Anmeldetag: 12.03.2002
(51) Int. Cl.: E05B 47/06, B60R 25/00

(54) **Elektromotorischer Stellantrieb für Kraftfahrzeuge, insbesondere für Zentralverriegelungen**
Electric motor actuator for motor vehicles, especially for central locking devices
Actionneur à moteur électrique pour véhicules automobiles, notamment pour dispositifs de commande centralisée

(30) Priorität: 27.03.2001 DE 10115154
(43) Veröffentlichungstag der Anmeldung: 02.10.2002
(73) Patentinhaber: Hella KG Hueck & Co., 59552 Lippstadt (DE)
(72) Erfinder: Seipel, Arnold, 33181 Wünnenberg (DE)

(56) Entgegenhaltungen:
- EP-A- 0 976 902
- EP-A- 1 035 281
- US-A- 4 712 441
- US-A- 6 109 124

## Beschreibung

Die Erfindung bezieht sich auf einen elektromotorischen Stellantrieb für Kraftfahrzeuge, insbesondere für Zentralverriegelungen.

Ein gattungsgemäßer Stellantrieb ist aus der DE 198 51 396 A1 bekannt. Ein derartiger Stellantrieb besteht aus einem Gehäuse, in dem ein Elektromotor angeordnet ist, der über Zahnräder eine Abtriebswelle antreibt. Die Abtriebswelle wirkt nun ihrerseits auf eine gegenüber dem Gehäuse längsverschiebliche Schubstange, die einen Türschlossriegel in eine Öffnungs- oder Schließstellung verstellt. Dabei wirkt über die Schubstange auf die Abtriebswelle eine axiale Kraft, die von einem Widerlager aufgenommen werden muß. Bei einer manuellen Betätigung des Stellantriebs muß einerseits die von dem Widerlager erzeugte Reibungskraft und andererseits das Schleppmoment des Elektromotors überwunden werden.

Aus Sicherheitsgründen und aus Gründen der Zuverlässigkeit sind die Elektromotoren so dimensioniert, dass bei elektromotorischer Betätigung die über die Abtriebswelle auf die Schubstange übertragene Kraft, die vom Widerlager der Abtriebswelle abgestützt werden muß, größer ist als die unter normalen Bedingungen aufzubringende Handbetätigungskraft. Damit wird sichergestellt, dass auch unter ungünstigen Bedingungen (z.B. Schwergängigkeit der zu verstellenden Mechanik bei Vereisung) eine elektromotorische Betätigung möglich ist. Aus diesem Grunde muß das Widerlager entsprechend widerstandsfähig ausgebildet sein, um dem Druck bei elektromotorischer Krafteinwirkung dauerhaft widerstehen zu können. Dies wird erreicht, indem die wirksame Widerlagerfläche entsprechend groß ausgelegt ist, wodurch der Druck minimiert wird. Anderenfalls würde das Widerlager beschädigt werden und unter Umständen sogar brechen. Durch diese Maßnahme steigt jedoch die Reibung, welche durch die Drehung der Abtriebswelle gegenüber dem Widerlager hervorgerufen wird. Diese Reibung muß dann auch in nachteiliger Weise bei einer Handbetätigung überwunden werden, wodurch die aufzubringende Handbetätigungskraft unakzeptabel hoch werden kann.

Um bei einer manuellen Betätigung die Handbetätigungskraft zu minimieren, wird in der DE 198 51 396 A1 eine Kupplungseinheit vorgeschlagen, die den Elektromotor bei manueller Betätigung von der Abtriebswelle abkuppelt. Damit muß bei einer manuellen Betätigung das Schleppmoment des Elektromotors nicht mehr überwunden werden. Die Reduzierung der Handbetätigungskraft auf diese Weise ist jedoch aufgrund der Kupplungseinheit relativ teuer.

Aufgabe der Erfindung ist es, einen elektromotorischen Stellantrieb der eingangs beschriebenen Art in einfacher und kostengünstiger Weise so auszubilden, dass nur eine geringe Handbetätigungskraft erforderlich ist.

Diese Aufgabe wird dadurch gelöst, dass die Abtriebswelle ein zusätzliches, zweites axiales Abstützelement zur Abstützung bei elektromotorischer Betätigung aufweist, das mit einem zusätzlichen, zweiten gehäuseseitigen axialen Widerlager zusammenwirkt, wobei das zusätzliche Abstützelement und das zusätzliche Widerlager so zueinander angeordnet sind, dass
a) die Abtriebswelle sich unterhalb einer bestimmten axialen Krafteinwirkung (Handbetätigung) nur mit ihrem Stirnende gegenüber dem ersten axialen Widerlager abstützt, wobei sich zwischen dem zusätzlichen Abstützelement und dem zusätzlichen axialen Widerlager ein Luftspalt befindet,
b) die Abtriebswelle sich oberhalb einer bestimmten Krafteinwirkung mit dem zusätzlichen, zweiten Abstützelement gegenüber dem zusätzlichen, zweiten gehäüseseitigen Widerlager abstützt, wobei gleichzeitig das erste Widerlager durch das Stirnende der Abtriebswelle elastisch deformiert wird.

Durch das Vorsehen eines zweiten Abstützelements und eines zweiten, diesem Abstützelement zugeordneten Widerlagers für die Abstützung bei motorischem Betrieb kann für die im Fall der Handbetätigung wirksame Widerlagerung eine nahezu punktförmige Abstützung gewählt werden, da die dort wirkende Kraft nicht so groß ist. Die punktförmige Abstützung hat jedoch im Fall der Handbetätigung den Vorteil, dass nur eine vergleichsweise geringe Reibung überwunden werden muß.

Im Falle der motorischen Betätigung, wo die auf die Abtriebswelle wirkende Kraft wesentlich größer ist, wird das erste Widerlager durch das Stirnende der Abtriebswelle nur geringfügig und im elastischen Bereich deformiert, und zwar nur soweit bis der Luftspalt zwischen dem zweiten Abstützelement und dem zweiten Widerlager überbrückt ist und das zweite Abstützelement am zweiten Widerlager zur Anlage kommt. Selbstverständlich kann auch das Stirnende der Abtriebswelle bei entsprechender Ausbildung vom Widerlager elastisch deformiert werden. Dabei erfolgt die weitere Abstützung der Abtriebswelle dann über das zweite Widerlager relativ großflächig, um dem erhöhten Druck dauerhaft standzuhalten.

Durch das zusätzliche Abstützelement/Widerlager werden die hohen Kräfte bei motorischer Betätigung abgestützt. Die im Fall der manuellen Betätigung allein wirksame punktförmige Abstützung wird im Fall der motorischen Betätigung jedoch nur bis zu einer definierten, unkritischen Grenze belastet. Eine Zerstörung des Widerlagers wird sicher vermieden.

Im Fall der manuellen Betätigung ist somit nur eine geringe Handbetätigungskraft erforderlich. Das Vorsehen eines zusätzlichen Abstützelements an der Abtriebswelle sowie des dazu gehörigen gehäuseseitigen Widerlagers ist in einfacher und kostengünstiger Weise zu realisieren, da sowohl die Abtriebswelle mit dem zusätzlichen Abstützelement als auch das Gehäuse mit dem zusätzlichen Widerlager jeweils einstückig aus Kunststoff hergestellt werden.

Anhand der beigefügten Zeichnungen wird die Erfindung nachfolgend näher erläutert. Es zeigt:
- Figur 1: eine perspektivische Darstellung des Stellantriebs bei geöffnetem Gehäuse,
- Figur 2: einen Schnitt durch einen Teil des Stellantriebs bei manueller Betätigung,

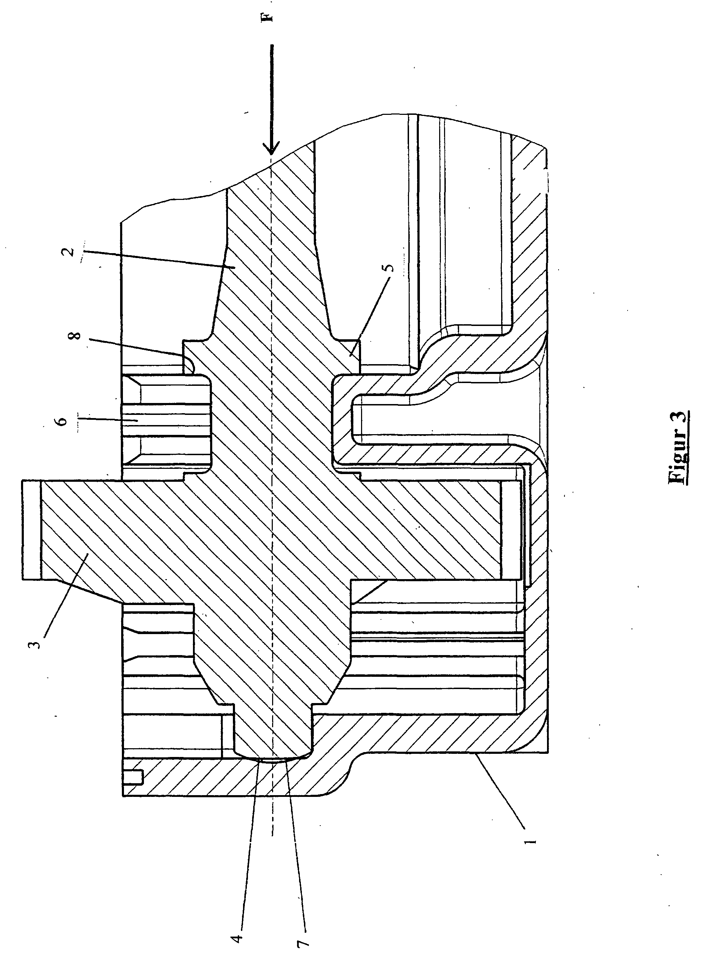

- Figur 3: einen Schnitt wie in Figur 2, jedoch bei motorischer Betätigung.

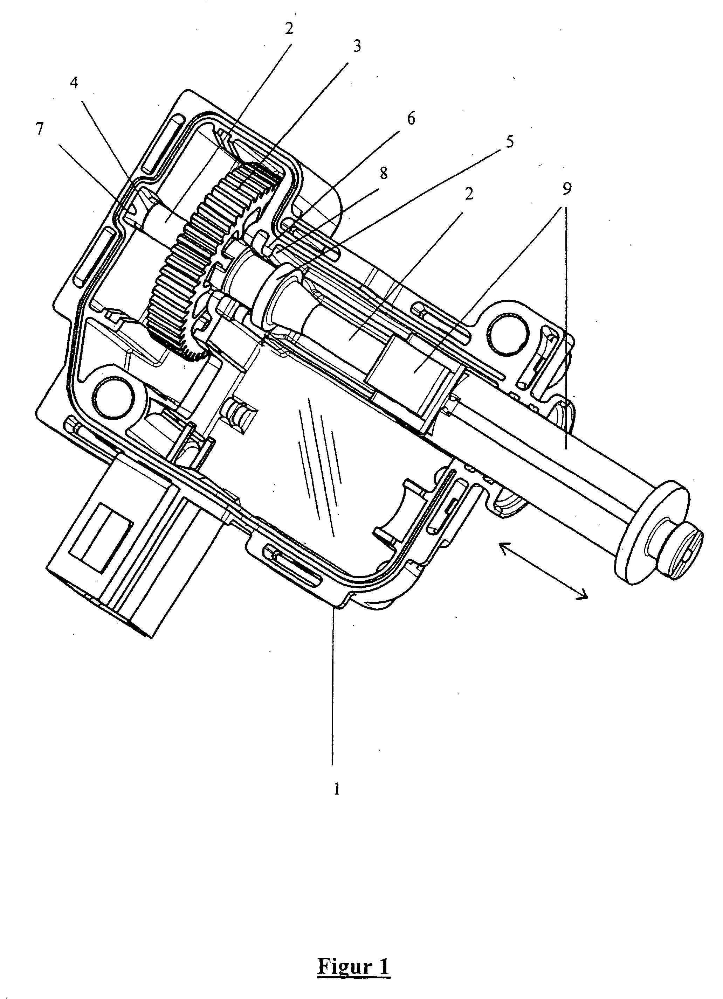

Figur 1 zeigt eine perspektivische Darstellung des Stellantriebs bei geöffnetem Gehäuse, d.h. bei abgenommenem Gehäusedeckel. Aus Gründen der besseren Übersichtlichkeit sind der Elektromotor und das von ihm angetriebene Ritzel nicht dargestellt. In dem Gehäuseunterteil (1) ist die Abtriebswelle (2) in einem Lagerbock (6) radial gelagert, wobei mit der Abtriebswelle (2) einstückig ein Zahnrad (3) verbunden ist, das von dem Ritzel des Elektromotors angetrieben wird. Der Lagerbock (6) ist einstückig mit dem Gehäuseunterteil (1) als Einschnürung ausgebildet. Die Abtriebswelle (2) wirkt nun auf eine gegenüber dem Gehäuse axial verschiebliche Schubstange (9), die dann ihrerseits einen Verriegelungsmechanismus in eine Öffnungs- oder Schließstellung verstellt. Für die Kraftübertragung auf die Schubstange (9) weist die Abtriebswelle (2) auf einem Teilabschnitt ein Außengewinde auf, das in ein Innengewinde der Schubstange (9) als Gegengewinde eingreift. Bei einer motorischen oder manuellen Verschiebung der Schubstange (9) wirkt auf die Abtriebswelle (2) eine axiale Kraft (F), die abgestützt werden muß. Zu diesem Zweck stützt die Abtriebswelle (2) sich nun mit ihrem der Schubstange (9) abgewandten Stirnende (4) gegenüber einem ersten gehäuseseitigen axialen Widerlager (7) ab. Bei einer Handbetätigung (geringe Krafteinwirkung) des Stellantriebs - Hineinschieben der Schubstange - stützt die Abtriebswelle (2) sich ausschließlich gegenüber diesem ersten Widerlager (1) ab. Damit in diesem Fall die Reibung bei Drehung der Abtriebswelle (2) nicht so groß ist, ist das Stirnende (4) der Abtriebswelle (2) zur Bewirkung einer nahezu punktförmigen Abstützung nach außen leicht gewölbt ausgebildet. Aufgrund der geringern Fläche wird so die Reibung minimiert. Das erste gehäuseseitige axiale Widerlager (1) wird vorzugsweise von einer Gehäusewandung gebildet, die als Tasche ausgebildet auch zusätzlich zur Radiallagerung der Abtriebswelle (2) dienen kann.

Zusätzlich weist die Abtriebswelle (2) ein zweites axiales Abstützelement (5) in Form eines einstückig mit der Abtriebswelle (2) verbundenen Wellenflansches (5) auf. Dieses Abstützelement (5) wirkt mit einem zweiten gehäuseseitigen Widerlager (8) in einer weiter unten beschriebenen Art und Weise zusammen. In der dargestellten Ausführungsform bildet eine Seitenfläche des Lagerbocks (6) eine Anschlagfläche (8) als Widerlager. Der Wellenflansch (5) und die Anschlagfläche (8) des Lagerbocks (6) sind dabei so zueinander angeordnet, dass
a) die Abtriebswelle (2) sich unterhalb einer bestimmten axialen Krafteinwirkung (F) nur mit ihrem Stirnende (4) gegenüber dem ersten axialen Widerlager (7) abstützt, wobei sich zwischen dem zusätzlichen Abstützelement (5) und dem zusätzlichen axialen Widerlager (8) ein Luftspalt (10) befindet,
b) die Abtriebswelle (2) sich oberhalb einer bestimmten Krafteinwirkung (F) mit dem zusätzlichen Abstützelement (5) gegenüber dem zusätzlichen gehäuseseitigen Widerlager (8) abstützt, wobei gleichzeitig das erste Widerlager (7) durch das Stirnende (4) der Abtriebswelle (2) elastisch deformiert wird.

Dabei entspricht die Länge der elastischen Deformation in Axialrichtung der Breite des Luftspaltes (10). Ein typischer Wert hierfür ist 0,2 mm.

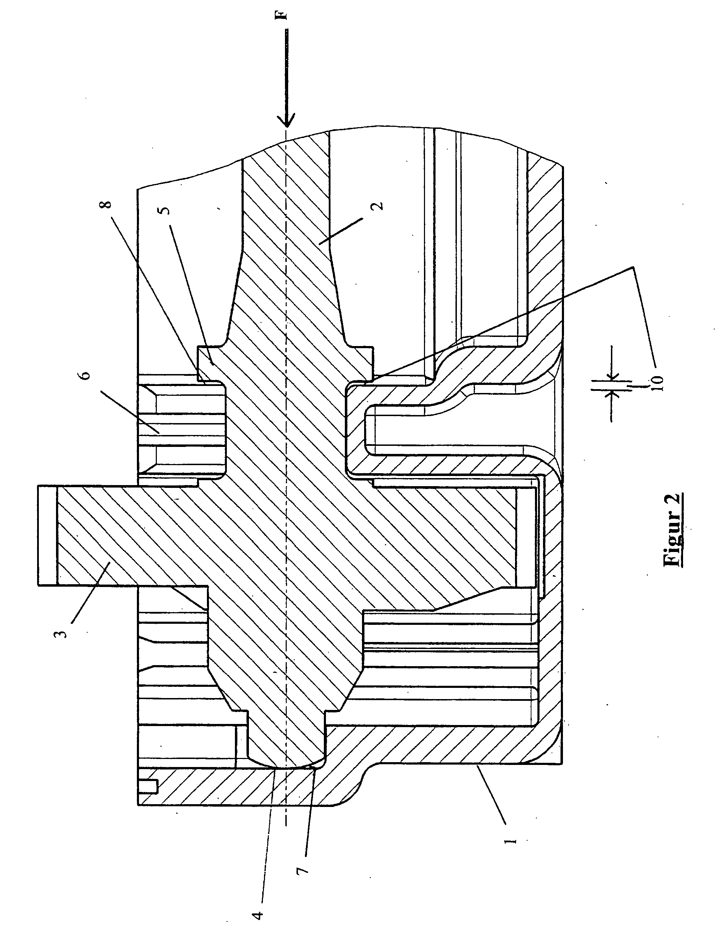

Figur 2 zeigt einen Teilausschnitt des Gehäuseunterteils (1). Die Abtriebswelle (2) einschließlich Zahnrad (3) ist schraffiert dargestellt. In diesem Fall stützt die Abtriebswelle (2) sich lediglich mit ihrem gewölbten Stirnende (4) gegenüber dem ersten gehäuseseitigen Widerlager (7) ab. Die Anschlagfläche (8) des Lagerbocks (6) - das zweite Widerlager - und der Wellenflansch (5) - das zweite Abstützelement - sind bei dieser Größe der Krafteinwirkung noch durch einen Luftspalt (10) voneinander getrennt. Ab einer bestimmten Krafteinwirkung ist dann die Gehäusewandung - das erste Widerlager (7) - so weit elastisch deformiert, dass der Wellenflansch (5) an der Anschlagfläche (8) des Lagerbocks (6) zur Anlage kommt. Ein weiterer Kraftimpuls wird dann von dem Lagerbock (6) als zweitem Widerlager (7) abgestützt.

Ein weiterer Vorteil, der durch die Leichtläufigkeit des Stellantriebs erzielt wird, besteht darin, dass bei Stellantrieben, wo die Schubstange oder eine mit der Schubstange verbundene Stellstange eine Anlaufschräge zur manuellen Verriegelung aufweist, auf eine zusätzliche Feder zur federelastischen Rückstellung eines Teils, das die Anlaufschräge trägt, verzichtet werden kann. Bei schwergängigen Stellantrieben dient diese leicht verstellbare Feder dazu, ein Zurückschieben der Anlaufschräge mit geringer Kraft zu ermöglichen. Beim erfindungsgemäßen Stellantrieb ist das Zurückschieben aufgrund der Leichtgängigkeit auch ohne ein zusätzlich federndes Teil möglich.

## Patentansprüche

1. Elektromotorischer Stellantrieb für Kraftfahrzeuge, insbesondere für Zentralverriegelungen, bestehend aus
- einem Gehäuse (1),
- einem von einem Elektromotor angetriebenem Ritzel,
- einer im Gehäuse (1) gelagerten Abtriebswelle (2) mit einem Zahnrad (3), das von dem Ritzel angetrieben wird, wobei
- die Abtriebswelle (2) auf eine gegenüber dem Gehäuse (1) axial verschiebliche Schubstange (9) einwirkt,
- die Abtriebswelle (2) sich mit ihrem der Schubstange (9) abgewandten Stirnende (4) gegenüber einem ersten gehäuseseitigen axialem Widerlager (7) bei axialer Krafteinwirkung abstützt,
**dadurch gekennzeichnet, dass**
die Abtriebswelle (2) ein zusätzliches, zweites axiales Abstützelement (5) aufweist, das mit einem zusätzlichen, zweiten gehäuseseitigen axialem Widerlager (8) zusammenwirkt, wobei das zusätzliche Abstützelement (5) und das zusätzliche Widerlager (8) so zueinander angeordnet sind, dass
a) die Abtriebswelle (2) sich unterhalb einer bestimmten axialen Krafteinwirkung nur mit ihrem Stirnende (4) gegenüber dem ersten axialen Widerlager (7) abstützt, wobei sich zwischen dem zusätzlichen Abstützelement (5) und dem zusätzlichen axialen Widerlager (8) ein Luftspalt (10) befindet,
b) die Abtriebswelle (2) sich oberhalb einer bestimmten Krafteinwirkung mit dem zusätzlichen Abstützelement (5) gegenüber dem zusätzlichen gehäuseseitigen Widerlager (8) abstützt, wobei gleichzeitig das erste Widerlager (7) durch das Stirnende (4) der Abtriebswelle (2) elastisch deformiert und/oder das Stirnende (4) vom dem Widerlager (7) elastisch deformiert wird.

2. Elektromotorischer Stellantrieb nach Anspruch 1,
**dadurch gekennzeichnet, dass**
das Stirnende (4) der Abtriebswelle zur Bewirkung einer nahezu punkförmigen Abstützung gegenüber dem ersten Widerlager (7) nach außen gewölbt ausgebildet ist.

3. Elektromotorischer Stellantrieb nach Anspruch 1 oder 2,
**dadurch gekennzeichnet, dass**
das erste Widerlager (7) von einer Gehäusewandung gebildet wird.

4. Elektromotorischer Stellantrieb nach einem der vorstehenden Ansprüche,
**dadurch gekennzeichnet, dass**
das zusätzliche Abstützelement (5) als einstückig mit der Antriebswelle (2) ausgebildeter Wellenflansch ausgebildet ist.

5. Elektromotorischer Stellantrieb nach einem der vorstehenden Ansprüche,
**dadurch gekennzeichnet, dass**
das zusätzliche gehäuseseitige axiale Widerlager (8) ein Lagerbock (6) ist, der auch zur radialen Lagerung der Abtriebswelle (2) dient.

6. Elektromotorischer Stellantrieb nach einem der vorstehenden Ansprüche,
**dadurch gekennzeichnet, dass**
das Zahnrad (3) auf der Abtriebswelle (2) zwischen dem Wellenflansch (5) und dem Stirnende (4) der Abtriebswelle (2) angeordnet ist.

## Claims

1. Electric motor actuator for motor vehicles, more particularly for central locking devices, comprising:
- a housing (1),
- a pinion powered by an electric motor,
- a power take-off shaft (2) seated in the housing (1) and having a gear wheel (3) which is powered by the pinion, with
- the power take-off shaft (2) operating on a connecting rod (9) which is axially displaceable with respect to the housing (1), and
- the power take-off shaft (2) being supported by the front end (4) thereof situated furthest from the connecting rod (9), with respect to a first axial abutment (7) located on the housing side, the force acting axially,
**characterised in that** the power take-off shaft (2) incorporates an additional, second supporting element (5) which cooperates with an additional, second axial abutment (8) located on the housing side, the additional supporting element (5) and the additional abutment (8) being so arranged in relation to one another that
a) below a certain level of axial force, the power take-off shaft (2) is only supported by its front end (4) with respect to the first axial abutment (7), and there is then an air gap (10) between the additional supporting element (5) and the additional axial abutment (8),
b) above a certain level of force, the power take-off shaft (2) is supported by the additional supporting element (5) with respect to the additional abutment (8) located on the housing side, and at the same time the first abutment (7) is elastically deformed by the front end (4) of the power take-off shaft (2) and/or the front end (4) is elastically deformed by the abutment (7).

2. Electric motor actuator according to claim 1,
**characterised in that** the front end (4) of the power take-off shaft is convex in shape so as to produce a virtually punctiform support with respect to the first abutment (7).

3. Electric motor actuator according to claim 1 or 2,
**characterised in that** the first abutment (7) is formed by one wall of the housing.

4. Electric motor actuator according to any of the preceding claims,
**characterised in that** the additional supporting element (5) is configured as a shaft flange designed so as to be integral with the power take-off shaft (2).

5. Electric motor actuator according to any of the preceding claims,
**characterised in that** the additional axial abutment (8) located on the housing side is a bearing bracket (6) which is also used to radially seat the power take-off shaft (2).

6. Electric motor actuator according to any of the preceding claims,
**characterised in that** the gear wheel (3) is arranged on the power take-off shaft (2), between the shaft flange (5) and the front end (4) of the power take-off shaft (2).

## Revendications

1. Actionneur à moteur électrique pour véhicules automobiles, en particulier pour verrouillages centralisés, constitué par
- un boîtier (1),
- un pignon entraîné par un moteur électrique,
- un arbre mené (2) monté dans le boîtier (1) avec une roue dentée (3) qui est entraînée par le pignon,
- l'arbre mené (2) agissant sur une tige de poussée (9) déplaçable axialement par rapport au boîtier (1),
- l'arbre mené (2) prenant appui avec son extrémité frontale (4) détournée de la tige de poussée (9) par rapport à un premier contre-appui (7) axial côté boîtier, lors de l'application d'une force axiale,
**caractérisé en ce que**
- l'arbre mené (2) présente un deuxième élément de soutien (5) axial qui coopère avec un deuxième contre-appui (8) axial additionnel, côté boîtier, l'élément de soutien (5) additionnel et le contre-appui (8) additionnel étant agencés l'un par rapport à l'autre de telle sorte que
a) en dessous d'une application de force axiale déterminée, l'arbre mené (2) ne prend appui qu'avec son extrémité frontale (4) contre le premier contre-appui axial (7), une fente d'air (10) se trouvant entre l'élément de soutien (5) additionnel et le contre-appui axial (8) additionnel,
b) en dessus d'une application de force axiale déterminé, l'arbre mené (2) prend appui avec l'élément de soutien (5) additionnel contre le contre-appui (8) additionnel côté boîtier, et en même temps, le premier contre-appui (7) est élastiquement déformé par l'extrémité frontale (4) de l'arbre mené (2) et/ou l'extrémité frontale (4) est élastiquement déformée par le contre-appui (7).

2. Actionneur à moteur électrique selon la revendication 1, **caractérisé en ce que**
l'extrémité frontale (4) de l'arbre mené est réalisée bombée vers l'extérieur pour réaliser un soutien presque ponctuel contre le premier contre-appui (7).

3. Actionneur à moteur électrique selon l'une ou l'autre des revendications 1 et 2, **caractérisé en ce que**
le premier contre-appui (7) est formé par une paroi de boîtier.

4. Actionneur à moteur électrique selon l'une des revendications précédentes, **caractérisé en ce que**
l'élément de soutien (5) additionnel est réalisé sous forme de bride d'arbre réalisé d'un seul tenant avec l'arbre mené (2).

5. Actionneur à moteur électrique selon l'une des revendications précédentes, **caractérisé en ce que**
le contre-appui (8) axial additionnel côté boîtier est un support de palier (6) qui sert aussi au montage radial de l'arbre mené (2).

6. Actionneur à moteur électrique selon l'une des revendications précédentes, **caractérisé en ce que**
la roue dentée (3) est agencée sur l'arbre mené (2) entre la bride d'arbre (5) et l'extrémité frontale (4) de l'arbre mené (2).
